Europäisches Patentamt

European Patent Office

Office européen des brevets

(11) Publication number: **0 372 572**
**A2**

# EUROPEAN PATENT APPLICATION

(21) Application number: **89122690.4**

(22) Date of filing: **08.12.89**

(51) Int. Cl.⁵: **C08G 63/16, D01F 6/84,**
**D01F 8/14, D04H 1/54**

(30) Priority: **09.12.88 US 281825**

(43) Date of publication of application:
**13.06.90 Bulletin 90/24**

(84) Designated Contracting States:
**DE FR NL**

(71) Applicant: **E.I. DU PONT DE NEMOURS AND COMPANY**
**1007 Market Street**
**Wilmington Delaware 19898(US)**

(72) Inventor: **Ahn, John Seungun**
**1503 Sutton Place**
**Kinston North Carolina 28501(US)**

(74) Representative: **Abitz, Walter, Dr.-Ing. et al**
**Abitz, Morf, Gritschneder, Freiherr von Wittgenstein Postfach 86 01 09**
**D-8000 München 86(DE)**

(54) **Novel polyesters and their use as binder filaments and fibers.**

(57) Novel polyesters are derived from a mixture of terephthalic and glutaric acids of their derivatives, optionally with a small amount of isophthalic acid or a derivative, and a mixture of ethylene glycol and diethylene glycol. They are suitable for use as a crystalline low-melting, low-shrinkage binder fiber or filament for nonwovens and the like.

EP 0 372 572 A2

## Novel Polyesters and Their Use as Binder Filaments and Fibers

### Field of the Invention

This invention relates to the manufacture of polyesters which in fiber or filament form are useful for thermally bonding nonwovens, for example, low density fiberfill batts.

### Background of the Invention

It is well known to produce nonwovens such as low density fiberfill batts by mixing polyester fibers or filaments, usually of poly(ethylene terephthalate) (abbreviation 2G-T), with lower melting polyester binder fibers or filaments which, when properly heated, soften or melt to provide interfiber or interfilament bonding in order to give structural integrity to the fibrous structure. Alternatively, the low melting binder component may be present in a bicomponent fiber or filament as the sheath about a core comprising 2G-T, and these then may be used alone or in admixture with other fibers or filaments to produce the nonwoven. In U.S. Patent 3,589,956 (Kranz et al.) it is taught that when low density nonwovens such as fiberfill batts are prepared from such binder fibers, it is important to anneal, i.e. heat relax, the fibers during their manufacture to stabilize them against shrinkage during the bonding step.

According to U.S. Patent 4,129,675 (Scott) a preferred polyester binder fiber for the manufacture of nonwovens such as fiberfill batts is composed of an ethylene terephthalate/isophthalate copolymer (abbreviation 2G-T/I) having a T/I mole ratio of about 70/30. Another approach, according to U.S. Patent 4,418,116 (Scott), is to provide a polyester binder fiber composed of the terephthalate of a mixture of ethylene and diethylene glycols (abbreviation 2G/DEG-T) wherein the 2G/DEG mole ratio is about 80/20 to about 65/45. Fibers or filaments of the aforementioned types are substantially amorphous, i.e. usually having less than about 25% crystallinity, although, according to the second-mentioned Scott patent, a more significant increase in crystallinity can be obtained if desired.

Still another type of binder fiber which is available commercially is believed to be a crystalline copolyester of the terephthalate of a mixture of n-butylene glycol and n-hexamethylene glycol. An advantage of these binder fibers is that the crystallinity gives rise to a more sharply defined melting point for the fiber which in turn makes it possible to effect heat relaxation of the fibers at a higher temperature which is closer to the melting point of the binder fiber, and this in turn reduces the tendency of the nonwoven to shrink during bonding. Nonetheless, this particular copolyester binder fiber is made from relatively expensive monomers and this has limited its utility to date.

Accordingly, it is an object of the invention to provide an improved polyester which is obtainable from relatively inexpensive monomers and which can be made into crystalline fibers and filaments well suited for bonding nonwovens such as fiberfill batts.

### Summary of the Invention

The invention provides a polyester derived from a mixture of terephthalic and glutaric acids or their derivatives, optionally with a small amount of isophthalic acid or a derivative, and a mixture of ethylene glycol and diethylene glycol.

More particularly, this invention provides a polyester suitable for use as a low-melting, low-shrinkage binder fiber or filament, said polyester consisting essentially of recurring structural units of the formula

$$-\overset{O}{\overset{\|}{C}}-R-\overset{O}{\overset{\|}{C}}-OGO-$$

wherein R is about
65 to 95 mole % para-phenylene,
5 to 35 mole % $-(CH_2)_3-$, and
0 to 5 mole % meta-phenylene, and
G is about
75 to 95 mole % $-CH_2-CH_2-$, and

5 to 25 mole % -$(CH_2)_2$-O-$(CH_2)_2$-.

Preferably, the polyester will have a melting point of about 160-220°C. The invention also provides crystalline monocomponent fibers and filaments of the aforementioned polyester, as well as bicomponent sheath core fibers and filaments wherein the core is polyethylene terephthalate and the sheath is the aforementioned polyester.

## Detailed Description of Preferred Embodiments

The above-described polyesters may be prepared by conventional polycondensation techniques using, as the glycol component, a combination of 75 to 95 mole % of ethylene glycol with complementally 5 to 25 mole % of diethylene glycol, and as the acid component, a combination of 65 to 95 mole % of terephthalic acid with 0 to 5 mole % isophthalic acid and complementally 5 to 35 mole % of glutaric acid. In lieu of the mentioned dicarboxylic acids, ester forming derivatives such as the dimethyl esters of the acids may be used.

In the Examples which follow, the various monomeric components are charged simultaneously to a polymerization vessel and subjected to polycondensation conditions to produce a linear polyester in which the units are randomly distributed along the molecular chain. It will be understood that it is also possible, however, to first react two or more of the monomeric components to a prepolymer stage followed by addition of the remaining components and completion of the polymerization.

In any event, the particular mole percentages of the aforementioned components are desirably selected to provide a polyester melting point of about 160-220°C, preferably of about 165-200°C, but most preferably of about 170-195°C, since they are then conveniently utilizable as fibers with 2G-T fibers, which typically have a somewhat higher melting point of 245-260°C, to produce bonded nonwovens such as fiberfill batts.

It will be understood that while the crystallizable polyesters of the invention are well suited for use as crystalline binder fibers or filaments in nonwovens, they can also be used to advantage in the form of cast films or molded articles wherever polyesters with such melting points and attendant properties are desired.

An important aspect of the invention is, however, the production of fibers or filaments from the above-described polyesters. Fibers and filaments herein are interchangeable terms in the general sense, but where a more specific acknowledgement of length is appropriate, the term "fibers" is intended to refer to short filaments as in "staple fibers". Hereafter only one of the terms may be used.

The polyesters of the invention may be converted to fibers or filaments by conventional melt spinning techniques. Deniers of 2 to 15 dpf are most common. They can be produced as monocomponent fibers or filaments but most advantageously are produced as bicomponent filaments in which the low melting polyester is a sheath concentrically arranged about a core of a relatively higher melting polyester such as 2G-T. However, side-by-side bicomponent filaments are also possible as are the use of multicomponent filaments. Usually the higher melting component of such bicomponent fibers and filaments will constitute 50 to 90% by weight of the fiber or filaments. In any event, both components are advantageously crystalline, as is the case for example when the higher melting component is crystalline 2G-T.

The filaments may be used as-spun (undrawn) or in a stretched (drawn or oriented) condition. Drawing to reduce denier or for increasing orientation and developing crystallinity can be accomplished by the usual procedures.

Fibers normally will be spun, combined to form a tow, optionally stretched and crimped in tow form, and then cut to staple of the desired length in a conventional staple cutting operation. During this processing, if desired, the binder fiber may be cutter-blended with conventional fiberfill or staple fibers, for example with poly(ethylene terephthalate) fibers.

For use with commercial polyester fiberfill of poly(ethylene terephthalate) it is most preferred that the polyester binder fibers have a melting point of less than about 220°C. Binder fibers having much higher melting points require bonding temperatures sufficiently great that there may be a detrimental effect on the bulk of the nonwoven.

As will be illustrated in the Examples which follow, the polyesters of the invention may be used as binder fibers or filaments in the production of low density fiberfill batts. These will typically have a bulk density of less than 0.05 gm/cm³, preferably less than 0.01 gm/cm³. Uses for such batts include pillows, quilts and padding for furniture upholstering. However, it is also advantageous to use the fibers or filaments to prepare higher density products such as nonwoven sheet-like structures. These can range from somewhat bulkier products such as sheets for diaper coverstock or roof liners for automobiles, normally with densities of 0.05 to 0.3 gm/cm$^3$, to even more compressed paper-like, felt-like sheet, or even rigid structures. In the above described products there will usually be used a mixture of the binder fibers or filaments with higher melting fibers or filaments such as those from conventional crystalline poly(ethylene terephthalate). Usually the binder fibers or filaments will constitute 5 to 75% by weight of the blend. The batt is then subjected to elevated temperatures, above the melting point of the binder fiber or filament but below the softening point of the other component, usually using convection or radiation heating. The heating should occur at least on the surface of the batt or other product to seal it and prevent fibers from protruding, but more commonly the heating will occur throughout the product.

Alternatively, the fibers or filaments of the invention may be used to prepare woven or knitted fabrics wherever a binder fiber is needed to enhance strength and structural integrity. For example, in the construction of velour upholstery fabrics for automobiles and the like there is occasionally a tendency for tufts of yarn to pull out or for the filaments to form pills. Such a tendency can be reduced by blending a minor amount such as 3 to 20 weight % of the lower melting crystalline fibers or filaments with other fibers or filaments such as ordinary polyethylene terephthalate fibers or filaments followed by fabric finishing at temperatures sufficient to melt the lower melting component and bond the tuft fibers or filaments to the fabric body.

It should be noted that in spite of the dilution of the aromatic ring content in the polymer chain brought about by replacing ethylene linkages with diethylene ether linkages and phenylene linkages with trimethylene linkages, the crystallizable polyesters of the invention may be spun, crimped and drawn using conventional poly(ethylene terephthalate) manufacturing equipment. Likewise the polymers can be polymerized in conventional poly(ethylene terephthalate) equipment. For acceptable melt-spinning performance the polymers should have an RV of at least about 16 and preferably at least about 18 for a more effective melt viscosity. Usually the RV will not be higher than about 30.

In the production of fibers or filaments of the polyesters of the invention, it is desirable that the fibers or filaments be heat relaxed at some stage of their processing under essentially no tension to stabilize the fibers or filaments against shrinkage. This is particularly important when they are to be used in the production of low density nonwovens such as fiberfill batts. The heat relaxing should be effected somewhat below the melting point of the fiber or filament, e.g. such as between 20° and 100° below, but preferably between 30° and 50° below the melting point.

Polyester melting points herein, unless otherwise stated, are obtained in a conventional way using a Differential Scanning Calorimeter (DSC) apparatus.

"Relative viscosity" (RV) is the ratio of the viscosity of a solution of 0.8 grams of polyester dissolved in 10 ml of hexafluoroisopropanol containing 80 ppm $H_2SO_4$ to the viscosity of the $H_2SO_4$-containing hexafluoroisopropanol itself, both measured at 25°C in a capillary viscometer and expressed in the same units.

The term "crystalline" herein is meant to indicate that the fibers or filaments have a significant percent crystallinity, as for example measured by density. This is to ensure that the fiber is characterized by a well defined melting point.

The invention will be further illustrated by the following examples wherein parts and percentages are by weight unless otherwise indicated.


EXAMPLE 1


This example demonstrates the preparation and utility of a crystallizable polyester of the invention from ingredients which include dimethyl glutarate and diethylene glycol.

Using a conventional four-vessel continuous polymerization system for polyesters coupled to a spinning machine, polymer is prepared and melt spun into filaments from dimethyl terephthalate/dimethyl glutarate (abbreviation T/5 - 80/20 mole %) and ethylene glycol/diethylene glycol (abbreviation 2G/DEG - 85/15 mole %).

Dimethyl glutarate and diethylene glycol are added to a mix tank containing ethylene glycol and catalysts. The catalyst is a mixture of manganese acetate, antimony trioxide and tetraisopropyl titanate in the weight ratio of 10.4/9.5/1, respectively. The entire mixture is continuously fed from the mix tank to the first vessel where ester interchange is carried out for about 60 minutes at a temperature of about 177°C. Dimethyl terephthalate in molten form is directly metered into this first vessel. The catalyst concentration is adjusted to provide 130 - 150 ppm Mn based on the polymer to be formed. The mole ratio of total glycols to dimethyl terephthalate/dimethyl glutarate is 2.1 to 1.0.

To the liquid product of the ester interchange vessel is added sufficient phosphoric acid to give 40 - 70 ppm phosphorus based upon polymer and a sufficient amount of a slurry of 5% TiO2 in ethylene glycol to provide 0.3 percent of the delusterant in the polymer. The mixture is then transferred to the second vessel where the temperature is increased to about 245°C and the pressure is reduced to 90 mm mercury as polymerization is initiated for about 23 minutes in the conventional manner. Excess glycol is removed through a vacuum system.

The low molecular weight material is then pumped to a third vessel where the temperature is increased to about 275°C and the pressure is reduced to about 30 mm mercury. Excess glycol is again removed through a vacuum system over a period of about 10 minutes.

The low molecular weight polymer thus obtained is then transferred to a fourth vessel where the temperature is controlled at 272-278°C and the pressure is reduced to about 3 mm mercury. After about 180 minutes the polymer is recovered and found to have a relative viscosity (RV) of 22.5. Upon analysis it is found to be composed of acid-based units having about 80/20 mole % of T/5 and of glycol-based units having about 85/15 mole % of 2G/DEG.

The polymer is next spun into crystalline monocomponent filaments by extruding through orifices (of about 0.38 mm diameter) of a spinneret block maintained at 260°C. As the filaments exit the spinneret, they are quenched with air at 21°C., collected in a bundle and then about 0.1% of a finish is applied. Filaments from several spinnerets are combined to produce a filamentary tow having a total denier of about 60,000. The finish is a 2.5% emulsion in water of a mixture of 57.5% Zelec® NK antistat (a long chain alcohol phosphate available from E. I. du Pont de Nemours and Company), 34.3% of triethanolamine and 8.2% of oleic acid.

The tow is drawn 3.4X at 60°C., crimped in a stuffing box type crimper and relaxed under essentially no restraint in an oven for 10 minutes at 72°C to minimize filament shrinkage. The resultant monofilaments have a denier of 2.7, a melting point of 171°C. per DSC, 9 crimps/inch, a crimp index of 25, and low shrinkage compared to non-crystalline amorphous isophthalic acid-based binder filaments such as 2G/DEG - T/I (90/10 -60/40 mole %).

The binder filaments and conventional 2G-T filaments are fed into a cutter to obtain a 50/50 blend of staple fibers which are then carded to prepare a nonwoven batt having a density of about 0.002 gm/cm³. The nonwoven batt is thereupon bonded by blowing hot air through the batt at 200°C for 5 minutes. The batt is found to have a strong bond strength with a low batt shrinkage.

## EXAMPLE 2

The crystallizable polyester, 2G/DEG -T/5 (85/15 mole % - 80/20 mole %) as described in Example 1 and homopolymer 2G-T are melted separately and extruded through a spinning block at 290°C using a sheath-core spinneret assembly of the type shown in Figs. 1-14 of Kilian U. S. 2,936,482. The 2G-T melt is extruded from each capillary of the top plate through the centerline of the counterbore of each spinneret plateau and the other polyester is metered through the space between each plateau of the spinneret and the top plate into the spinneret's counterbore, thus forming a bicomponent sheath-core filament with both components being crystalline. The centerline of each capillary in the top plate transporting 2G-T has to be precisely aligned with that of the counterbore of each plateau in the spinneret to produce a concentric sheath-core filament cross-section. (Non-concentric sheath-core filaments would tend to increase batt shrinkage.) As the filaments exit the spinneret, they are quenched by air at 21°C., collected into a bundle and finish is applied as in Example 1. The filaments from several spinnerets are combined to produce a filamentary tow having a total denier of about 60,000.

The tow is drawn 3.4X at 60°C., crimped in a stuffing box type of crimper and relaxed under essentially no restraint in an oven for 10 minutes at 72°C and then for 10 minutes at 145°C to minimize filament shrinkage. The finished product has a denier of 5.3, a melting point of 171°C for the sheath polymer and of 250°C for the 2G-T core polymer. The product also has a denier of 5.3 dpf, about 9 crimps/inch, a crimp index of 25 and low shrinkage compared to a corresponding bicomponent filament in which the sheath is amorphous, such as 2G/DEG - T/I(90/10 mole% - 60/40 mole %).

Equal weights of the bicomponent filament and conventional crystalline 2G-T filaments are fed into a cutter to provide a cut length of 1.5 inches, then blended and carded to prepare a nonwoven batt having a density of about 0.002 gm/cm³. The nonwoven batt is thereupon bonded by blowing hot air at 200°C through the batt for 5 minutes. It is found to have a strong bond strength with a low batt shrinkage.

EP 0 372 572 A2

## EXAMPLE 3

Example 2 is repeated except for a variation in the composition of the low melting polyester. Also relaxation is effected only at 72° C. In this case the composition is 2G/DEG - T/5 (90/10 mole % - 70/30 mole %). Polymerization, spinning and processing conditions are otherwise the same as those of Example 2. The melting point of the low melting polyester in the bicomponent filaments is 167° C per DSC analysis.

## EXAMPLE 4

Example 2 is repeated except for a variation in the composition of the low melting polyester. In this case the composition is 2G/DEG - T/5 (80/20 mole % - 88/12 mole %). Polymerization, spinning and processing conditions are otherwise the same as those of Example 2. The melting point of the low melting polyester as the bicomponent is 195° C per DSC analysis.

## EXAMPLE 5

Example 3 is repeated except for a variation in the composition of the low melting polyester. In this case the composition is 2G/DEG - T/5/I (90/10 mole % - 69/30/1 mole %) which has slightly lower melting point and shrinkage, in filament form, compared to binder filaments of 2G/DEG - T/5 (90/10 mole % - 70/30 mole %). Polymerization, spinning and processing conditions are otherwise the same as those of Example 3. The source of the isophthalate is dimethyl isophthalate, which is added to the mix tank along with the dimethyl glutarate and diethylene glycol. The melting point of the low melting polyester in the bicomponent filaments is 163° C.

The following Table 1 summarizes the low melting polyesters prepared in the foregoing examples.

TABLE 1

| | Glycol Component, Mole % | | Acid Component, Mole % | | | |
|---|---|---|---|---|---|---|
| Example | 2G | DEG | T | 5 | I | Melting Point, ° C |
| 1 | 85 | 15 | 80 | 20 | 0 | 171° |
| 2 | 85 | 15 | 80 | 20 | 0 | 171° |
| 3 | 90 | 10 | 70 | 30 | 0 | 167° |
| 4 | 80 | 20 | 88 | 12 | 0 | 195° |
| 5 | 90 | 10 | 69 | 30 | 1 | 163° |

## PRODUCT APPLICATIONS

This section illustrates the utilization of fibers or filaments of the invention in the formation of typical end-use products.

Fabric:

A yarn of continuous monocomponent binder filaments having a denier of 125 and prepared from the polymer as described in Example 4 is drawn 1.78X by conventional methods to a denier of 73, the yarn is

6

heat set at constant length at 140°C to reduce shrinkage. The yarn is then mixed in the ratio of 1 to 1 with conventional poly(ethylene terephthalate) filaments having a denier of 100 by air jet texturing. The yarn thus formed has the normal appearance of an air jet textured yarn with the filaments of both components intimately mixed. It is knit into one bar of a velour automotive upholstery fabric using a double needle Raschel machine. Conventional poly(ethylene terephthalate) yarns are used in the other bars of the fabrics but nylon yarns may similarly be used if desired. The product is heat bonded at a temperature of 200°C. The tufts of the fabric are resistant to the yarn pulling out and the filaments are highly resistant to pilling.

Automotive Roof Liner:

A roof liner substrate for automobile use is made using sheath-core binder fibers as described in Example 4. These fibers are carded (in 100% form) into a cross-lapped batt of 28 oz./sq. yd. The batt is put between two polytetrafluoroethylene-coated glass fabric sheets, heated, molded and consolidated to a density of 0.12 gm/cm³ at 220°C for 4 minutes between the platens of a press (which are heated to 240°C). It is then cooled for 4 minutes between the platens in this consolidated form.

The resulting composite, in the shape of the desired roof liner, is found to maintain its shape even when subjected to bending in hot air at 100°C. A similar shaped product, made from amorphous polyester binder fibers, does not.

Nonwoven Fabrics by Calender Bonding

A series of nonwoven fabrics are produced using binder filaments as produced in Example 2. The binder filaments are used both as 100% and in blends with conventional 1.5 denier 2G-T filaments. Tows of the filaments are opened and blended, if they are to be combined with 2G-T filaments, then fed to a card which forms a fiber web with a basis weight in the range of 18 to 30 gm/yd². The webs are then fed between two heated calender rolls under about 200 psi pressure to form thermally bonded fabrics. The two calenders have two different surface characteristics, one has a smooth surface, the other is engraved to give points with a diamond pattern having a total bonding area of about 20%. Both calenders are steel and can be heated to a desired temperature.

The calender temperatures are varied at approximately 10° intervals from 150° to 200° using either 25%, 50% or 100% of the binder fibers. The products are formed to have high fabric tensile values in comparison with similarly produced fabrics made using known binder fibers.

## Claims

1. A polyester suitable for use as a low-melting, low-shrinkage binder fiber or filament, said polyester consisting essentially of recurring structural units of the formula

$$-\overset{O}{\overset{\|}{C}}-R-\overset{O}{\overset{\|}{C}}-OGO-$$

wherein R is about
65 to 95 mole % para-phenylene,
5 to 35 mole % $-(CH_2)_3-$, and
0 to 5 mole % meta-phenylene, and
G is about
75 to 95 mole % $-CH_2-CH_2-$, and
5 to 25 mole % $-(CH_2)_2-O-(CH_2)_2-$

2. A polyester of claim 1 having a melting point of about 160-220°C.

3. A polyester of claim 2 wherein R is about 80 mole % para-phenylene and 20 mole % $-(CH_2)_3-$ and G is about 85 mole % $-CH_2-CH_2-$ and 15 mole % $-(CH_2)_2-O-(CH_2)_2$.

4. A polyester of claim 1 wherein R is about 69 mole % para-phenylene, 30 mole % $-(CH_2)_3-$ and 1 mole % isophenylene, and G is about 90 mole % $-CH_2-CH_2-$ and 10 mole % $-(CH_2)_2-O-(CH_2)_2-$.

5. A crystalline monocomponent fiber or filament of the polyester of claim 1.

6. A bicomponent sheath-core fiber or filament wherein the core is polyethylene terephthalate and the sheath is crystalline and composed of the polyester of claim 1.

7. A blend of the crystalline monocomponent fiber or filaments of claim 5 with poly(ethylene terephthalate) fiber or filaments.

8. A batt or other fibrous product composed of the blend of claim 7, at least the surface of said batt bonded by convection or radiation heating.

9. A blend of the bicomponent fiber or filaments of claim 6 with poly(ethylene terephthalate) fiber or filaments.

10. A batt or other fibrous product composed of the blend of claim 9, at least the surface of said batt bonded by convection or radiation heating.